# EUROPEAN PATENT SPECIFICATION

(11) **EP 1 406 835 B1**
(45) Date of publication and mention of the grant of the patent: **21.12.2011**
(21) Application number: 02741587.6
(22) Date of filing: 19.06.2002
(51) Int. Cl.: C01B 31/18

(54) **METHOD AND APPARATUS FOR PRODUCTION OF [11C] CARBON MONOXIDE IN LABELING SYNTHESIS**
VERFAHREN UND VORRICHTUNG ZUR HERSTELLUNG VON [11C]-KOHLENMONOXID BEI DER MARKIERUNGSSYNTHESE
PROCEDE ET APPAREIL DE PRODUCTION DE MONOXYDE DE CARBONE [11 C] DANS LA SYNTHESE DE MARQUEURS

(30) Priority: 19.06.2001 SE 0102174
(43) Date of publication of application: 14.04.2004
(73) Proprietor: GE Healthcare Limited, Little Chalfont Buckinghamshire HP7 9NA (GB)
(72) Inventor: KIHLBERG, Tor, S-753 34 Uppsala (SE); LANGSTROM, Bengt, S-757 56 Uppsala (SE)
(74) Representative: Hammett, Audrey Grace Campbell
(86) International application number: PCT/SE2002/001222
(87) International publication number: WO 2002/102711

(56) References cited:
- US-A- 5 859 070
- CROUZEL C. ET AL.: 'C-labelled phosgene: an improved procedure and synthesis device' INT. J. APPL. RADIAT. ISOL. vol. 34, no. 11, 1983, pages 1558 - 1559, XP001147857
- ZEISLER S.K. ET AL.: 'Conversion of no-carrier-added (11C) carbon dioxide to (11C) carbon monoxide on molybdenum for the synthesis of 11C-labelled aromatic ketones' APPL. RADIAT. ISOT. vol. 48, no. 8, 1997, pages 1091 - 1095, XP004094769

## Description

### Field of the Invention

The present invention relates to a method and an apparatus for production and use of [¹¹C]carbon monoxide in labeling synthesis. More specifically, the invention relates to a method and apparatus for producing an [¹¹C]carbon monoxide enriched gas mixture from an initial [¹¹C]carbon dioxide gas mixture, and using the produced gas mixture in labeling synthesis.

### Background of the invention

Tracers labeled with short-lived positron emitting radionuclides (e.g. ¹¹C, t_{1/2} = 20.3 min) are frequently used in various non-invasive in vivo studies in combination with positron emission tomography (PET). Because of the radioactivity, the short half-lives and the submicromolar amounts of the labeled substances, extraordinary synthetic procedures are required for the production of these tracers. An important part of the elaboration of these procedures is development and handling of new ¹¹C-labelled precursors. This is important not only for labeling new types of compounds, but also for increasing the possibility of labeling a given compound in different positions.

During the last two decades carbonylation chemistry using carbon monoxide has developed significantly. The recent development of methods such as palladium-catalysed carbonylative coupling reactions has provided a mild and efficient tool for the transformation of carbon monoxide into different carbonyl compounds.

Carbonylation reactions using [¹¹C]carbon monoxide has a primary value for PET-tracer synthesis since biologically active substances often contain carbonyl groups or functionalities that can be derived from a carbonyl group. The syntheses are tolerant to most functional groups, which means that complex building blocks can be assembled in the carbonylation step to yield the target compound. This is particularly valuable in PET-tracer synthesis where the unlabelled substrates should be combined with the labeled precursor as late as possible in the reaction sequence, in order to decrease synthesis-time and thus optimize the uncorrected radiochemical yield

When compounds are labeled with ¹¹C, it is usually important to maximize specific radioactivity. In order to achieve this the isotopic dilution and the synthesis time must be minimized. Isotopic dilution from atmospheric carbon dioxide may be substantial when [¹¹C]carbon dioxide is used in a labeling reaction. Due to the low reactivity and atmospheric concentration of carbon monoxide (0.1 ppm vs. 3.4 x 104 ppm for CO₂ this problem is reduced with reactions using [¹¹C]carbon monoxide.

The synthesis of [¹¹C]carbon monoxide from [¹¹C]carbon dioxide using a heated column containing reducing agents such as zinc, charcoal or molybdenum has been described previously in several publications. But although [¹¹C]carbon monoxide was one of the first ¹¹C-labelled compounds to be applied in tracer experiments in man, it has until recently not found any practical use in the production of PET-tracers. One reason for this is the low solubility and relative slow reaction rate of [¹¹C]carbon monoxide that causes low trapping efficiency in reaction media. The general procedure using precursors such as [¹¹C]methyl iodide, [¹¹C]hydrogen cyanide or [¹¹C]carbon dioxide is to transfer the radioactivity in a gas-phase, and trap the radioactivity by leading the gas stream through a reaction medium. Until recently this has been the only accessible procedure to handle [¹¹C]carbon monoxide in labeling synthesis. With this approach, the main part of the labeling syntheses with [¹¹C]carbon monoxide can be expected to give a very low yield or fail completely.

There are only a few examples of practically valuable ¹¹C-labelling syntheses using high-pressure techniques (e.g. > 300 bar). In principal, high pressures can be utilized for increasing reaction rates and minimizing the amounts of reagents. One problem with this approach is how to confine the labeled precursor in a small high pressure reactor. Another problem is the construction of the reactor. If a common column type of reactor is used (i.e. a cylinder with tubing attached to each end), the gas-phase will actually become efficiently excluded from the liquid phase at pressurization. The reason is that the gas-phase, in contracted form, will escape into the attached tubing and away from the bulk amount of the liquid reagent.
The cold-trap technique is widely used in the handling of ¹¹C-labelled precursors, particularly in the case of [¹¹C]carbon dioxide, e.g. as disclosed by Crouzel et al (Int. J. Appl. Radiat. Isot. 1983; 34: 1558-9) and by Zeisler et al (Appl. Radioat. Isot. 1997; 48: 1091-5). The procedure has, however, only been performed in one single step and the labeled compound was always released in a continuous gas-stream simultaneous with the heating of the cold-trap. Furthermore, the volume of the material used to trap the labeled compound has been relatively large in relation to the system to which the labeled compound has been transferred. Thus, the option of using this technique for radical concentration of the labeled compound and miniaturization of synthesis systems has not been explored. This is especially noteworthy in view of the fact that the amount of a ¹¹C-labelled compound usually is in the range 20-60 nmol.

### Summary of the invention

Obviously an improved method and a system for utilizing [¹¹C]carbon monoxide in labeling processes are needed. The object of the invention is to provide a method and a system for production of and use of [¹¹C]carbon monoxide in labeling synthesis that overcomes the drawbacks of the prior art devices. This is achieved by the method as defined in claim 1, and the system as defined in claim 7.

One advantage with such a method and system is that nearly quantitative conversion of ¹¹C]carbon monoxide into labeled products can be accomplished.

There are several other advantages with the present method and system. The high-pressure technique makes it possible to use low boiling solvents such as diethyl ether at high temperatures (e.g. 200 °C). The use of a closed system consisting of materials that prevents gas diffusion, increases the stability of sensitive compounds and could be advantageous also with respect to Good Manufacturing Practice (GMP).

Still other advantages are achieved in that the resulting labeled compound is highly concentrated, and that the miniaturization of the synthesis system facilitates automation, rapid synthesis and purification, and optimization of specific radioactivity through minimization of isotopic dilution.

Most important is the opening of completely new synthesis possibilities, as exemplified by the present invention.

Embodiments of the invention are defined in the dependent claims.

### Brief description of the figures

Fig. 1 shows a flow chart over the method according to the invention
Fig. 2 is a schematic view of a [¹¹C]carbon monoxide production and labeling-system according to the invention.
Fig. 3a and 3b shows alternative embodiments of a reaction chamber according to the invention.

### Detailed description of the invention

Embodiments of the invention will now be described with reference to the figures.

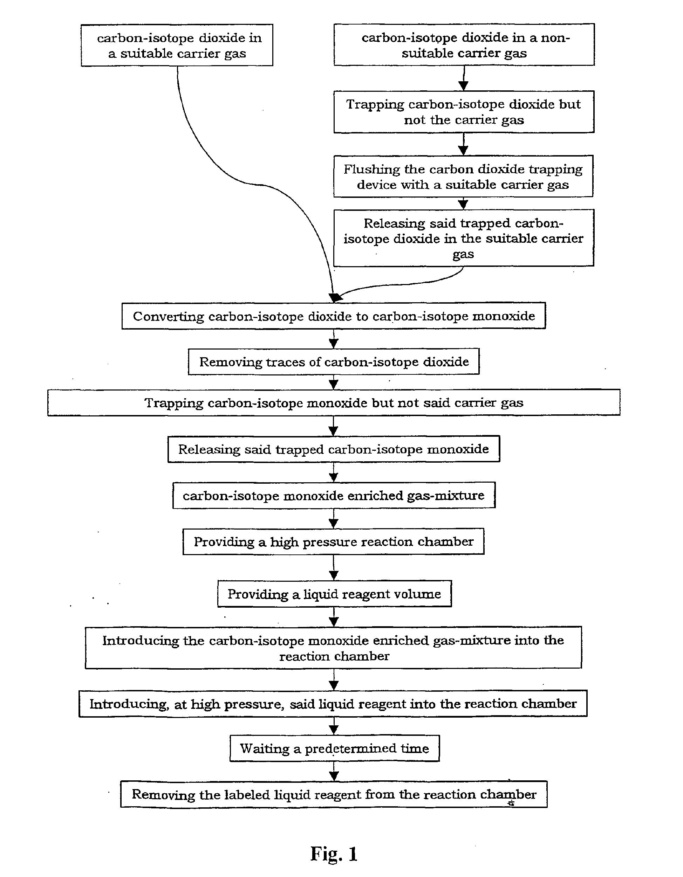

Fig. 1 shows a flow chart over the method according to the invention, which firstly comprises production of a [¹¹C]carbon monoxide enriched gas-mixture and secondly a labeling synthesis procedure. More in detail the production part of the method comprises the steps of:
- Providing [¹¹C]carbon dioxide in a suitable carrier gas of a type that will be described in detail below.
- Converting [¹¹C)carbon dioxide to [¹¹C]carbon monoxide by introducing said gas mixture in a reactor device which will be described in detail below.
- Removing traces of [¹¹C]carbon dioxide by flooding the converted gas-mixture through a carbon dioxide removal device wherein [¹¹C]carbon dioxide is trapped but not [¹¹C]carbon monoxide nor the carrier gas, The carbon dioxide removal device will be described in detail below.
- Trapping [¹¹C]carbon monoxide in a carbon monoxide trapping device, wherein [¹¹C]carbon monoxide is trapped but not said carrier gas. The carbon monoxide trapping device will be described in detail below.
- Releasing said trapped [¹¹C]carbon monoxide from said trapping device, whereby a volume of [¹¹C]carbon monoxide enriched gas-mixture is achieved.

The production step may further comprise a step of changing carrier gas for the initial [¹¹C]carbon dioxide gas mixture if the initial [¹¹C]carbon dioxide gas mixture is comprised of [¹¹C]carbon dioxide and a first carrier gas not suitable as carrier gas for carbon monoxide due to similar molecular properties or the like, such as nitrogen. More in detail the step of providing [¹¹C]carbon dioxide in a suitable second carrier gas such as He, Ar.... comprises the steps of:
- Flooding the initial [¹¹C]carbon dioxide gas mixture through a carbon dioxide trapping device, wherein [¹¹C]carbon dioxide is trapped but not said first carrier gas The carbon dioxide trapping device will be described in detail below.
- Flushing said carbon dioxide trapping device with said suitable second carrier gas to remove the remainder of said first carrier gas.
- Releasing said trapped [¹¹C]carbon dioxide in said suitable second carrier gas. The labeling synthesis step that may follow the production step utilizes the produced [¹¹C]carbon dioxide enriched gas-mixture as labeling reactant. More in detail the step of labeling synthesis comprises the steps of:

- Providing a high pressure reaction chamber having a liquid reagent inlet and a labeling reactant inlet in a bottom surface thereof. The reaction chamber will be described in detail below.
- Providing a liquid reagent volume that is to be labeled. suitable samples are discussed above.
- Introducing the [¹¹C]carbon monoxide enriched gas-mixture into the reaction chamber via the labeling reactant inlet.
- Introducing, at high pressure, said liquid reagent into the reaction chamber via the liquid reagent inlet.
- Waiting a predetermined time while the labeling synthesis occurs.
- Removing the labeled liquid reagent from the reaction chamber.

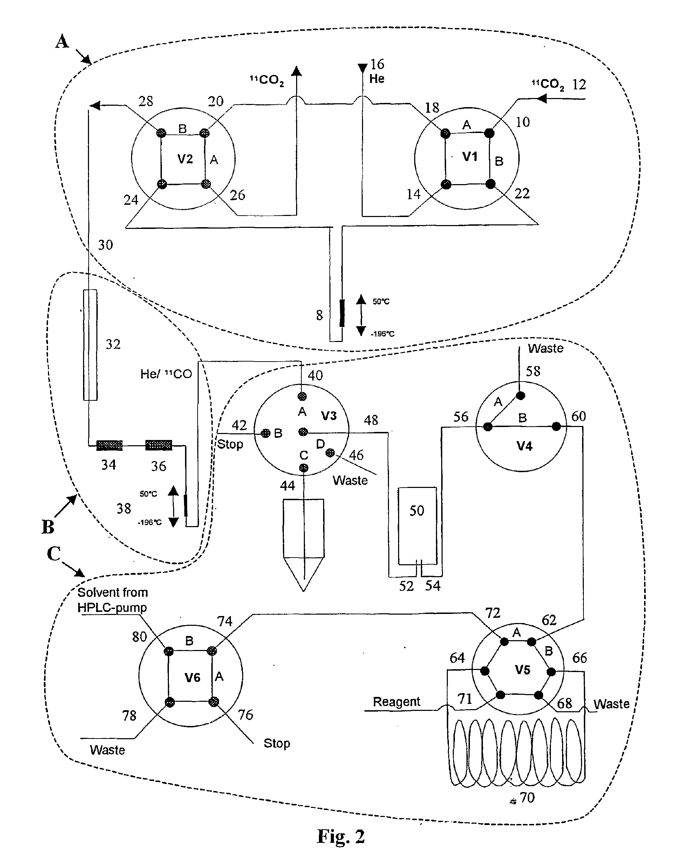

The step of waiting a predetermined time may further comprise heating the reaction chamber such that the labeling synthesis is enhanced. Fig. 2 schematically shows a [¹¹C]carbon dioxide production and labeling-system according to the present invention. The system is comprised of three main blocks, each handling one of the three main steps of the method of production and labeling:
- Block A is used to perform a change of carrier gas for an initial [¹¹C]carbon dioxide gas mixture, if the initial [¹¹C]carbon dioxide gas mixture is comprised of [¹¹C]carbon dioxide and a first carrier gas not suitable as carrier gas for carbon monoxide.
- Block B is used to perform the conversion from [¹¹C]carbon dioxide to [¹¹C]carbon monoxide, and purify and concentrate the converted [¹¹C]carbon monoxide gas mixture.
- Block C is used to perform the [¹¹C]carbon monoxide labeling synthesis.

Block A is normally needed due to the fact that [¹¹C]carbon dioxide usually is produced using the 14N(p,α)¹¹C reaction in a target gas containing nitrogen and 0.1% oxygen, bombarded with 17 MeV protons, whereby the initial [¹¹C]carbon dioxide gas mixture • comprises nitrogen as carrier gas. However, carbon monoxide and nitrogen show certain similarities in molecular properties making it difficult to separate them from each other, e.g. in a trapping device or the like, whereby it is difficult to increase the concentration of [¹¹C]carbon monoxide in such a gas mixture. Suitable carrier gases may instead be helium, argon or the like. Block A can also used to change the pressure of the carrier gas (e.g. from 1 to 4 bar), in case the external system does not tolerate the gas pressure needed in block B and C. In an alternative embodiment the initial [¹¹C]carbon dioxide gas mixture is comprised of [¹¹C]carbon dioxide and a first carrier gas that is well suited as carrier gas for carbon monoxide, whereby the block A may be simplified or even excluded.

According to a preferred embodiment (fig. 2) block A is comprised of a first valve V1, a carbon dioxide trapping device 8, and a second valve V2.

The first valve V1 has a carbon dioxide inlet 10 connected to a source of initial [¹¹C]carbon dioxide gas mixture 12, a carrier gas inlet 14 connected to a source of suitable carrier gas 16, such as helium, argon and the like. The first valve V1 further has a first outlet 18 connected to a first inlet 20 of the second valve V2, and a second outlet 22 connected to the carbon dioxide trapping device 8. The valve V1 may be operated in two modes A, B, in mode A the carbon dioxide inlet 10 is connected to the first outlet 18 and the carrier gas inlet 14 is connected to the second outlet 22, and in mode B the carbon dioxide inlet 10 is connected to the second outlet 22 and the carrier gas inlet 14 is connected to the first outlet 18. In addition to the first inlet 20, the second valve V2 has a second inlet 24 connected to the carbon dioxide trapping device 8. The second valve V2 further has a waste outlet 26, and a product outlet 28 connected to a product inlet 30 of block B. The valve V2 may be operated in two modes A, B, in mode A the first inlet 20 is connected to the waste outlet 26 and the second inlet 24 is connected to the product outlet 28, and in mode B the first inlet 20 is connected to the product outlet 28 and the second inlet 24 is connected to the waste outlet 26.

The carbon dioxide trapping device 8 is a device wherein carbon dioxide is trapped but not said first carrier gas, which trapped carbon dioxide thereafter may be released in a controlled manner. This may preferably be achieved by using a cold trap, such as a column containing a material which in a cold state, (e.g. -196°C as in liquid nitrogen or -186 °C as in liquid argon) selectively traps carbon dioxide and in a warm state (e.g. +50°C) releases the trapped carbon dioxide. (In this text the expression "cold trap" is not restricted to the use of cryogenics. Thus, materials that trap the topical compound at room temperature and release it at a higher temperature are included.) One suitable material is porapac Q®. The trapping behavior of a porapac-column is related to dipole-dipole interactions or possibly Van der Waal interaktions. The said column 8 is preferably formed such that the volume of the trapping material is to be large enough to efficiently trap (>95%) the [¹¹C]carbon dioxide, and small enough not to prolong the transfer of trapped carbon dioxide to block B. In the case of porapac Q® and a flow of 100 ml nitrogen/ min, the volume should be 50-150 µl. The cooling and heating of the carbon dioxide trapping device 8 may further be arranged such that it is performed as an automated process, e.g. by automatically lowering the column into liquid nitrogen and moving it from there into a heating arrangement.

According to the preferred embodiment of fig. 2 block B is comprised of a reactor device 32 in which [¹¹C]carbon dioxide is converted to [¹¹C]carbon monoxide, a carbon dioxide removal device 34, a check-valve 36, and a carbon monoxide trapping device 38, which all are connected in a line.

In the preferred embodiment the reactor device 32 is a reactor furnace comprising a material that when heated to the right temperature interval converts [¹¹C]carbon dioxide to [¹¹C]carbon monoxide. A broad range of different materials with the ability to convert carbon dioxide into carbon monoxide may be used, e.g. zinc or molybdenum or any other element or compound with similar reductive properties. If the reactor device 32 is a zinc furnace it should be heated to 400°C, and it is important that the temperature is regulated with high precision. The melting point of zinc is 420 °C and the zinc-furnace quickly loses it ability to transform carbon dioxide into carbon monoxide when the temperature reaches over 410 °C, probably due to changed surface properties. The material should be efficient in relation to its amount to ensure that a small amount can be used, which will minimize the time needed to transfer radioactivity from the carbon dioxide trapping device 8 to the subsequent carbon monoxide trapping device 38. The amount of material in the furnace should be large enough to ensure a practical life-time for the furnace (at least several days). In the case of zinc granulates, the volume should be 100-1000 µl.

The carbon dioxide removal device 34 is used to remove traces of [¹¹C]carbon dioxide from the gas mixture exiting the reactor device 32. In the carbon dioxide removal device 34, [¹¹C]carbon dioxide is trapped but not [¹¹C]carbon monoxide nor the carrier gas. The carbon dioxide removal device 34 may be comprised of a column containing ascarite® (i.e. sodium hydroxide on silica). [¹¹C]carbon dioxide that has not reacted in the reactor device 32, is trapped in this column (it reacts with sodium hydroxide and turns into sodium carbonate), while [¹¹C]carbon monoxide passes through. The radioactivity in the carbon dioxide removal device 34 is monitored as a high value indicates that the reactor device 32 is not functioning properly.

Like the carbon dioxide trapping device 8, the carbon monoxide trapping device 38, has a trapping and a releasing state. In the trapping state [¹¹C]carbon monoxide is selectively trapped but not said carrier gas, and in the releasing state said trapped [¹¹C]carbon monoxide is released in a controlled manner. This may preferably be achieved by using a cold trap, such as a column containing silica which selectively traps carbon monoxide in a cold state below -100°C, e.g. -196°C as in liquid nitrogen or -186 °C as in liquid argon, and releases the trapped carbon monoxide in a warm state (e.g. +50°C). Like the porapac-column, the trapping behavior of the silica-column is related to dipole-dipole interactions or possibly Van der Waal interactions. The ability of the silica-column to trap [¹¹C]carbon monoxide is reduced if the helium, carrying the radioactivity, contains nitrogen. A rationale is that since the physical properties of nitrogen are similar to carbon monoxide, nitrogen competes with carbon monoxide for the trapping sites on the silica.

According to the preferred embodiment of fig. 2 block C is comprised of a first and a second reaction chamber valve V3 resp. V4, the aforementioned reaction chamber 50, a reagent valve V5, an injection loop 70 and a solvent valve V6.

The first reaction chamber valve V3 has a gas mixture inlet 40 connected to the carbon monoxide trapping device 38, a stop position 42, a collection outlet 44, a waste outlet 46, and a reaction chamber connection port 48 connected to a gas inlet 52 of the reaction chamber 50. The first reaction chamber valve V3 has four modes of operation A to D. The reaction chamber connection port 48 is: in mode A connected to the gas mixture inlet 40, in mode B connected to the stop position 42, in mode C connected to the collection outlet 44, and in mode D connected to the waste outlet 46.

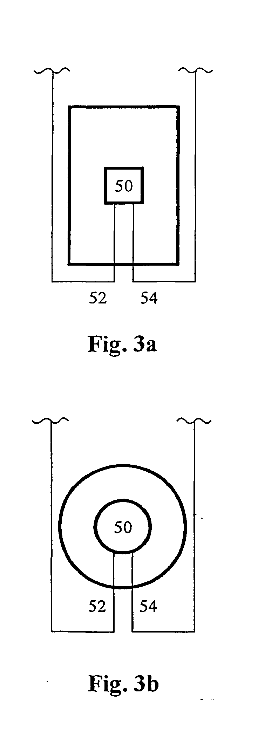

The reaction chamber 50 (micro-autoclave) has a gas inlet 52 and a liquid inlet 54, which are arranged such that they terminate at the bottom surface of the chamber. During operation the [¹¹C]carbon monoxide enriched gas mixture is introduced into the reaction chamber 50 through the gas inlet 52, where after the liquid reagent at high pressure enters the reaction chamber 50 through the liquid inlet 54. Fig. 3a and 3b shows schematic views of two preferred reaction chambers 50 in cross section. Fig 3a is a cylindrical chamber which is fairly easy to produce, whereas the spherical chamber of fig. 3b is the most preferred embodiment, as the surface area to volume-ratio of the chamber is further minimized. A minimal surface area to volume-ratio optimizes the recovery of labeled product and minimizes possible reactions with the surface material. Due to the "diving-bell construction" of the reaction chamber 50, both the gas inlet 52 and the liquid inlet 54 become liquid-filled and the reaction chamber 50 is filled from the bottom upwards. The gas-volume containing the [¹¹C]carbon monoxide is thus trapped and given efficient contact with the reaction mixture. Since the final pressure of the liquid is approximately 80 times higher than the original gas pressure, the final gas volume will be less than 2 % of the liquid volume according to the general gas-law. Thus, a pseudo one-phase system will result. After the labeling is finished the labeled volume is nearly quantitatively transferred from the reaction chamber by the internal pressure via the gas inlet and the first reaction chamber valve V3 in position C.

The second reaction chamber valve V4 has a reaction chamber connection port 56, a waste outlet 58, and a reagent inlet 60. The second reaction chamber valve V4 has two modes of operation A and B. The reaction chamber connection port 56 is: in mode A connected to the waste outlet 58, and in mode B it is connected to the reagent inlet 60.

The reagent valve V5, has a reagent outlet 62 connected to the reagent inlet 60 of the second reaction chamber valve V4, an injection loop inlet 64 and outlet 66 between which the injection loop 70 is connected, a waste outlet 68, a reagent inlet 71 connected to a reagent source, and a solvent inlet 72. The reagent valve V5, has two modes of operation A and B. In mode A the reagent inlet 71 is connected to the injection loop inlet 64, and the injection loop outlet 66 is connected to the waste outlet 68, whereby a reagent may be fed into the injection loop 70. In mode B the solvent inlet 72 is connected to the injection loop inlet 64, and the injection loop outlet 66 is connected to the reagent outlet 62, whereby reagent stored in the injection loop 70 may be forced via the second reaction chamber valve V4 into the reaction chamber 50 if a high pressure is applied on the solvent inlet 72.

The solvent valve V6, has a solvent outlet 74 connected to the solvent inlet 72 of the reagent valve V5, a stop position 76, a waste outlet 78, and a solvent inlet 80 connected to a solvent supplying HPLC-pump (High Performance Liquid Chromatography) or any liquid-pump capable of pumping organic solvents at 0-10 ml/ min at pressures up to 400 bar (not shown). The solvent valve V6, has two modes of operation A and B. In mode A the solvent outlet 74 is connected to the stop position 76, and the solvent inlet 80 is connected to the waste outlet 78. In mode B the solvent outlet 74 is connected to the solvent inlet 80, whereby solvent may be pumped into the system at high pressure by the HPLC-pump.

Except for the small volume of silica in the carbon monoxide trapping device 38, an important difference in comparison to the carbon dioxide trapping device 8, as well as to all related prior art, is the procedure used for releasing the carbon monoxide. After the trapping of carbon monoxide on carbon monoxide trapping device 38, valve V3 is changed from position A to B to stop the flow from the carbon monoxide trapping device 38 and increase the gas-pressure on the carbon monoxide trapping device 38 to the set feeding gas pressure (3-5 bar). The carbon monoxide trapping device 38 is then heated to release the carbon monoxide from the silica surface while not significantly expanding the volume of carbon monoxide in the carrier gas. Valve V4 is changed from position A to B and valve V3 is then changed from position B to A. At this instance the carbon monoxide is rapidly and almost quantitatively transferred in a well-defined micro-plug² into the reaction chamber 50. This unique method for efficient mass-transfer to a small reaction chamber 50, having a closed outlet, has the following prerequisites:
- A micro-column 38 defined as follows should be used. The volume of the trapping material (e.g. silica) should be large enough to efficiently trap (>95%) the [¹¹C]carbon monoxide, and small enough (< 1% of the volume of a subsequent reaction chamber 50) to allow maximal concentration of the [¹¹C]carbon monoxide. In the case of silica and a reaction chamber 50 volume of 200 µl, the silica volume should be 0.1-2 µl.
- The dead volumes of the tubing and valve(s) connecting the silica column and the reaction chamber 50 should be minimal (<10% of the micro-autoclave volume).
- The pressure of the carrier gas should be 3-5 times higher than the pressure in the reaction chamber 50 before transfer (1 atm.).
- In one specific preferred embodiment specifications, materials and components are chosen as follows. High pressure valves from Valco®, Reodyne® or Cheminert® are used. Stainless steel tubing with o.d. 1.5875 mm (1/16") is used except for the connections to the porapac-column 8, the silica-column 38 and the reaction chamber 50 where stainless steel tubing with o.d. 0.79375 mm (1/32") are used in order to facilitate the translation movement. The connections between V1, V2 and V3 should have an inner diameter of 0.2-1 mm. The requirement is that the inner diameter should be large enough not to obstruct the possibility to achieve the optimal flow of He (2-50 ml/min) through the system, and small enough not to prolong the time needed to transfer the radioactivity from the porapac-column 8 to the silica-column 38. The dead volume of the connection between V3 and the autoclave should be minimized (<10% of the autoclave volume) The inner diameter (0.05-0.1 mm) of the connection must be large enough to allow optimal He flow (2-50 ml/min). The dead volume of the connection between V4 and V5 should be less than 10% of the autoclave volume.

The porapac-column 8 preferably is comprised of a stainless steel tube (o.d.= 3.175 mm (1/8"), i.d.= 2 mm, 1= 20 mm) filled with Porapac Q® and fitted with stainless steel screens. The silica-column 38 preferably is comprised of a stainless steel tube (o.d= 1.5875 mm (1/ 16"), i.d.= 0.1 mm) with a cavity (d=1 mm, h= 1 mm, V= 0.8 µl) in the end. The cavity is filled with silica powder (100/80 mesh) of GC-stationary phase type. The end of the column is fitted against a stainless steel screen.

It should be noted that a broad range of different materials could be used in the trapping devices. If a GC-material is chosen, the criteria should be good retardation and good peak-shape for carbon dioxide and carbon monoxide respectively. The latter will ensure optimal recovery of the radioactivity. Below a detailed description is given of a method of producing [¹¹C]carbon using the system as described above.

Preparations of the system are performed by the steps 1 to 5:
1. V1 in position A, V2 in position A, V3 in position A, V4 in position A, helium flow on with a max pressure of 5 bar. With this setting, the helium flow goes through the porapac column, the zinc furnace, the silica column, the reaction chamber 50 and out through V4. The system is conditioned, the reaction chamber 50 is rid of solvent and it can be checked that helium can be flowed through the system with at least 10 ml/min.
2. The zinc-furnace is turned on and set at 400 °C.
3. The porapac- and silica-columns are cooled with liquid nitrogen. At -196 °C, the porapac-and silica-column efficiently traps [¹¹C]carbon dioxide and [¹¹C]carbon monoxide respectively.
4. V5 in position A (load). The injection loop (250 µl), attached to V5, is loaded with the reaction mixture.
5. The HPLC-pump is attached to a flask with freshly distilled THF (or other high quality solvent) and primed. V6 in position A.

Production of [¹¹C]carbon dioxide may be performed by the steps 6 to 7:
6. [¹¹C]carbon dioxide is produced using the 14N(p,α)¹¹C reaction in a target gas containing nitrogen (AGA, Nitrogen 6.0) and 0.1 % oxygen (AGA. Oxygen 4.8), bombarded with 17 MeV protons.
7. The [¹¹C]carbon dioxide is transferred to the apparatus using nitrogen with a flow of 100 ml/min.
   Synthesis of [¹¹C]carbon may thereafter be performed by the steps 8 to 16
8. V1 in position B and V2 in position B. The nitrogen flow containing the [¹¹C]carbon dioxide is now directed through the porapac-column (cooled to -196 °C) and out through a waste line. The radioactivity trapped in the porapac-column is monitored.
9. When the radioactivity has peaked, V1 is changed to position A. Now a helium flow is directed through the porapac-column and out through the waste line. By this operation the tubings and the porapac-column are rid of nitrogen.
10. V2 in position A and the porapac-column is warmed to about 50 °C. The radioactivity is now released from the porapac-column and transferred with a
helium, flow of 10 ml/ min into the zinc-furnace where it is transformed into [¹¹C]carbon monoxide.
11. Before reaching the silica-column (cooled to -196 °C), the gas flow passes the ascarite-column. The [¹¹C]carbon monoxide is now trapped on the silica-column. The radioactivity in the silica-column is monitored and when the value has peaked, V3 is set to position B and then V4 is set to position B.
12.The silica-column is heated to approximately 50 °C, which releases the [¹¹C]carbon monoxide. V3 is set to position A and the [¹¹C]carbon monoxide is transferred to the reaction chamber 50 within 15 s.
13. V3 is set to position B, V5 is set to position B, the HPLC-pump is turned on (flow 7 ml/ min) and V6 is set to position B. Using the pressurised THF (or other solvent), the reaction mixture is transferred to the reaction chamber 50. When the HPLC-pump has reached its set pressure limit (e.g 40 Mpa), it is automatically turned off and then V6 is set to position A.
14. The reaction chamber 50 is moved into the cavity of a heating-block containing a high boiling liquid (e.g. polyethylene glycol or mineral oil). The temperature of the heating-block is usually in the range 100-200 °C.
15. After a sufficient reaction-time (usually 5 min), V3 is set to position C and the content of the reaction chamber 50 is transferred to a collection vial.
16. The reaction chamber 50 can be rinsed by the following procedure: V3 is set to position B, the HPLC-pump is turned on, V6 is set to position B and when maximal pressure is reached V6 is set to position A and V3 is set to position 3 thereby transferring the rinse volume to the collection vial.

With the recently developed fully automated version of the reaction chamber 50 system according to the invention, the value of [¹¹C]carbon monoxide as a precursor for ¹¹C-labelled tracers has become comparable with [¹¹C]methyl iodide. Currently, [¹¹C]methyl iodide is the most frequently used ¹¹C-precursor due to ease in production and handling and since groups suitable for labeling with [¹¹C]methyl iodide (e.g. hetero atom bound methyl groups) are common among biologically active substances. Carbonyl groups, that can be conveniently labeled with [¹¹C]carbon monoxide, are also common among biologically active substances. In many cases, due to metabolic events in vivo, a carbonyl group may even be more advantageous than a methyl group as labeling position. The use of [¹¹C]carbon monoxide for production of PET-tracers may thus become an interesting complement to [¹¹C]methyl iodide. Furthermore, through the use of similar technology, this method will most likely be applicable for synthesis of ¹³C and ³⁴C substituted compounds.

The advantage of the present invention is illustrated by the following examples. In palladium-mediated reactions with [¹¹C]carbon monoxide, carbonyl compounds such as aldehydes, ketones, amides, imides and carboxylic acids, have been labeled in high yields. In selenium-mediated reactions with [¹¹C]carbon monoxide, carbamoyl compounds such as ureas, carbamates and carbonates has been labeled likewise. In many of these cases, the used carbonylation is probably the only realistic alternative .tor ¹¹C-labelling. The ¹¹C- labeled carbonyl compounds were obtained levels of specific radioactivity exceeding 1000Gbq/µmol. That is approximately 10 times higher than the corresponding values usually reported in syntheses with [¹¹C]methyl iodide.

### Notes

1. In this text the term "pseudo one-phase system" means a closed volume with a small surface area to volume-ratio containing >96% liquid and <4% gas at pressures exceeding 200 bar. In most syntheses the transfer of carbon monoxide from the gas-phase to the liquid phase will probably not be the rate limiting step.
2. In this text "micro-plug" is defined as a gas volume <10% of the volume of the reaction chamber 50, containing the topical substance (e.g. 1-20 µL).

## Claims

1. Method of labeling synthesis in a reaction chamber utilizing a ¹¹C carbon monoxide enriched gas-mixture as labeling reactant **characterized in that** the ¹¹C carbon monoxide enriched gas-mixture is produced from an initial ¹¹C carbon dioxide gas mixture, by
providing ¹¹C carbon dioxide in a suitable carrier gas,
converting ¹¹C carbon dioxide to ¹¹C carbon monoxide by introducing said gas mixture in a reactor device
trapping ¹¹C carbon monoxide in a carbon monoxide trapping device having a volume <1% of the volume of the reaction chamber, wherein ¹¹C carbon monoxide is trapped but not said carrier gas, and
releasing said trapped ¹¹C carbon monoxide from said trapping device in a well defined micro-plug, whereby a volume of ¹¹C carbon monoxide enriched gas-mixture is achieved, and wherein the volume of said micro-plug is < 10% of the volume of said reaction chamber.

2. Method according to claim 1, **characterized by** the step of:
removing traces of ¹¹C carbon dioxide by flooding the converted gas-mixture through a carbon dioxide removal device wherein ¹¹C carbon dioxide is trapped but not ¹¹C carbon monoxide nor the carrier gas.

3. Method according to claim 1 or 2 wherein the initial ¹¹C carbon dioxide gas mixture is comprised of ¹¹C carbon dioxide and a first carrier gas not suitable as carrier gas for carbon monoxide, such as nitrogen, **characterized in that** the step of providing ¹¹C carbon dioxide in a suitable second carrier gas comprises the steps of
flooding the initial ¹¹C carbon dioxide gas mixture through a carbon dioxide trapping device, wherein ¹¹C carbon dioxide is trapped but not said first carrier gas,
flushing said carbon dioxide trapping device with said suitable second carrier gas to remove the remainders of said first carrier gas, and releasing said trapped 11C carbon dioxide in said suitable second carrier gas.

4. Method according to claim 1, **characterized by** the steps of
providing a high pressure reaction chamber (50) having a liquid inlet and a gas inlet in a bottom surface thereof,
providing a reagent volume that is to be labeled
introducing the ¹¹C carbon monoxide enriched gas-mixture into the reaction chamber (50) via the gas inlet
introducing at high pressure said reagent into the reaction chamber (50) via the liquid inlet,
waiting a predetermined time while the labeling synthesis occurs, and removing the labeled reagent from the reaction chamber (50).

5. Method according to claim 4, **characterized in that** the step of introducing the reagent is performed using a pressure that is about 80 times higher than the pressure before the introduction, in order to obtain a pseudo one-phase system.

6. Method according to claim 4 or 5, **characterized in that** the step of waiting a predetermined time comprises heating the reaction chamber (50) to enhance the labeling synthesis.

7. System for labeling synthesis in a reaction chamber, utilizing a ¹¹C-carbon monoxide enriched gas-mixture as labeling reactant **characterized in that** it comprises
(a) a closed gas-flow system for producing a ¹¹C carbon monoxide enriched gas-mixture from an initial ¹¹C carbon dioxide gas mixture being comprised of ¹¹C carbon dioxide and a suitable carrier gas, comprising
a reactor device (32) in which ¹¹C carbon dioxide is converted to ¹¹C carbon monoxide, and
a carbon monoxide trapping device having a volume <1% of the volume of the reaction chamber having a trapping and a releasing state, in the trapping state ¹¹C carbon monoxide is trapped but not said carrier gas, and in the releasing state said trapped ¹¹C carbon monoxide is released in a well defined micro-plug, wherein the volume of said micro-plug is < 10% of the volume of said reaction chamber; and
(b) a reaction chamber (50) having a liquid inlet and a gas inlet in a bottom surface thereof.

8. System according to claim 7, **characterized in that** the reactor device (32) is a reactor furnace comprising a material that when heated to a predefined temperature interval converts ¹¹C carbon dioxide to ¹¹C carbon monoxide.

9. System according to claim 8, **characterized in that** the material comprised in the reactor furnace is zinc or molybdenum or any other element or compound with similar reductive properties.

10. System according to claim 9, **characterized in that** the reactor device (32) is a zinc furnace that is heated to approximately 400°C.

11. System according to any of the claims 7 to 10, **characterized in that** it further comprises
a carbon dioxide removal device, wherein ¹¹C carbon dioxide is trapped but not ¹¹C carbon monoxide nor the carrier gas, whereby traces of ¹¹C carbon dioxide are removed.

12. System according to claim 11, **characterized in that** the carbon dioxide trapping device is a column that selectively traps carbon dioxide.

13. System according to any of the claims 7 to 12, **characterized in that** the carbon monoxide trapping device is a cold trap.

14. System according to claim 13, **characterized in that** the carbon monoxide trapping device is a micro-column, which selectively traps carbon monoxide in a cold state below, and releases the trapped carbon monoxide in a warm state.

15. System according to any of the claims 7 to 14, wherein the initial ¹¹C carbon dioxide gas mixture is comprised of ¹¹C carbon dioxide and a first carrier gas not suitable as carrier gas for carbon monoxide, **characterized in that** the system further comprises
a carbon dioxide trapping device, wherein ¹¹C carbon dioxide is trapped but not said first carrier gas, that traps carbon dioxide which thereafter may be released in a controlled manner, whereby a change of carrier gas may be performed such that the gas mixture entering said reactor device (32) is comprised of carbon dioxide and a suitable carrier gas.

16. System according to claim 15, **characterized in that** the carbon dioxide trapping device is a column, which selectively traps carbon dioxide in a cold state, and releases the trapped carbon dioxide in a warm state.

## Patentansprüche

1. Verfahren zur Markierungssynthese in einer Reaktionskammer unter Verwendung eines ¹¹C-Kohlenmonoxid-angereicherten Gasgemisches als Markierungsreaktant, **dadurch gekennzeichnet, dass** das ¹¹C-Kohlenmonoxid-angereicherte Gasgemisch aus einem ¹¹C-Kohlendioxid-Gas-Ausgangsgemisch erzeugt wird, durch
Bereitstellen von ¹¹C-Kohlendioxid in einem geeigneten Trägergas,
Umwandeln von ¹¹C-Kohlendioxid zu ¹¹C-Kohlenmonoxid durch Einlassen des Gasgemisches in eine Reaktorvorrichtung,
Fangen von ¹¹C-Kohlenmonoxid in einer Kohlenmonoxid-Fallenvorrichtung mit einem Volumen < 1% des Volumens der Reaktionskammer, wobei ¹¹C-Kohlenmonoxid, aber nicht das Trägergas, gefangen wird, und
Freisetzen des gefangenen ¹¹C-Kohlenmonoxids aus der Fallenvorrichtung in einem klar definierten Mikro-Plug, wodurch ein Volumen von ¹¹C-Kohlenmonoxid-angereichertem Gasgemisch erhalten wird, und wobei das Volumen des Mikro-Plugs < 10% des Volumens der Reaktionskammer ist.

2. Verfahren nach Anspruch 1, **gekennzeichnet durch** den Schritt:
Entfernen von Spuren von ¹¹C-Kohlendioxid **durch** Fluten des umgewandelten Gasgemisches **durch** eine Kohlendioxid-Entfernungsvorrichtung, wobei ¹¹C-Kohlendioxid gefangen wird, aber nicht ¹¹C-Kohlenmonoxid und auch nicht das Trägergas.

3. Verfahren nach Anspruch 1 oder 2, wobei das ¹¹C-Kohlendioxid-Gas-Ausgangsgemisch aus ¹¹C-Kohlendioxid und einem ersten Trägergas besteht, das sich nicht als Trägergas für Kohlenmonoxid eignet, wie z.B. Stickstoff, **dadurch gekennzeichnet, dass** der Schritt des Bereitstellens von ¹¹C-Kohlendioxid in einem geeigneten zweiten Trägergas die Schritte umfasst Fluten des ¹¹C-Kohlendioxid-Gas-Ausgangsgemisches durch eine Kohlendioxid-Fallenvorrichtung, wobei ¹¹C-Kohlendioxid, aber nicht das erste Trägergas, gefangen wird,
Spülen der Kohlendioxid-Fallenvorrichtung mit dem geeigneten zweiten Trägergas, um die Überreste des ersten Trägergases zu entfernen, und
Freisetzen des gefangenen ¹¹C-Kohlendioxids im geeigneten zweiten Trägergas.

4. Verfahren nach Anspruch 1, **gekennzeichnet durch** die Schritte
Bereitstellen einer Hochdruck-Reaktionskammer (50), die einen Flüssigkeitseinlass und einen Gaseinlass in einer Bodenfläche derselben aufweist,
Bereitstellen eines Reagensvolumens, das zu markieren ist,
Einlassen des ¹¹C-Kohlenmonoxid-angereicherten Gasgemisches in die Reaktionskammer (50) via den Gaseinlass,
Einlassen des Reagens, mit hohem Druck, in die Reaktionskammer (50) via den Flüssigkeitseinlass,
Warten eine vorgegebene Zeit lang, während die Markierungssynthese erfolgt, und
Entfernen des markierten Reagens aus der Reaktionskammer (50).

5. Verfahren nach Anspruch 4, **dadurch gekennzeichnet, dass** der Schritt des Einlassens des Reagens unter Anwendung eines Drucks, der ungefähr achzigmal höher ist als der Druck vor dem Einlassen, durchgeführt wird, um ein Pseudoeinphasensystem zu erhalten.

6. Verfahren nach Anspruch 4 oder 5, **dadurch gekennzeichnet, dass** der Schritt des Wartens eine vorgegebene Zeit lang das Erhitzen der Reaktionskammer (50) umfasst, um die Markierungssynthese zu unterstützen.

7. System zur Markierungssynthese in einer Reaktionskammer, unter Verwendung eines ¹¹C-Kohlenmonoxid-angereicherten Gasgemisches als Markierungsreaktant, **dadurch gekennzeichnet, dass** es umfasst
(a) ein geschlossenes Gasströmungssystem zur Erzeugung eines ¹¹C-Kohlenmonoxid-angereicherten Gasgemisches aus einem ¹¹C-Kohlendioxid-Gas-Ausgangsgemisch, das aus ¹¹C-Kohlendioxid und einem geeigneten Trägergas besteht, umfassend
eine Reaktorvorrichtung (32), in der ¹¹C-Kohlendioxid zu ¹¹C-Kohlenmonoxid umgewandelt wird, und
eine Kohlenmonoxid-Fallenvorrichtung, die ein Volumen < 1% des Volumens der Reaktionskammer aufweist, mit einem Fang- und einem Freisetzungszustand, im Fangzustand wird ¹¹C-Kohlenmonoxid, aber nicht das Trägergas, gefangen, und im Freisetzungszustand wird das gefangene ¹¹C-Kohlenmonoxid in einem klar definierten Mikro-Plug freigesetzt, wobei das Volumen des Mikro-Plugs < 10% des Volumens der Reaktionskammer ist; und
(b)eine Reaktionskammer (50), die einen Flüssigkeitseinlass und einen Gaseinlass in einer Bodenfläche derselben aufweist.

8. System nach Anspruch 7, **dadurch gekennzeichnet, dass** die Reaktorvorrichtung (32) ein Reaktorofen ist, der ein Material umfasst, das, bei Erhitzen auf ein zuvor festgelegtes Temperaturintervall, ¹¹C-Kohlendioxid zu ¹¹C-Kohlenmonoxid umwandelt.

9. System nach Anspruch 8, **dadurch gekennzeichnet, dass** das im Reaktorofen enthaltene Material Zink oder Molybdän oder ein(e) beliebige(s) andere(s) Element oder Verbindung mit ähnlichen Reduktionseigenschaften ist.

10. System nach Anspruch 9, **dadurch gekennzeichnet, dass** die Reaktorvorrichtung (32) ein Zinkofen ist, der auf annähernd 400 °C erhitzt wird.

11. System nach einem der Ansprüche 7 bis 10, **dadurch gekennzeichnet, dass** es weiterhin umfasst
eine Kohlendioxid-Entfernungsvorrichtung, wobei ¹¹C-Kohlendioxid gefangen wird, aber nicht ¹¹C-Kohlenmonoxid und auch nicht das Trägergas, wodurch Spuren von ¹¹C-Kohlendioxid entfernt werden.

12. System nach Anspruch 11, **dadurch gekennzeichnet, dass** die Kohlendioxid-Fallenvorrichtung eine Säule ist, die Kohlendioxid selektiv fängt.

13. System nach einem der Ansprüche 7 bis 12, **dadurch gekennzeichnet, dass** die Kohlenmonoxid-Fallenvorrichtung eine Kühlfalle ist.

14. System nach Anspruch 13, **dadurch gekennzeichnet, dass** die Kohlenmonoxid-Fallenvorrichtung eine Mikrosäule ist, die Kohlenmonoxid in einem kalten Zustand selektiv fängt, und das gefangene Kohlenmonoxid in einem warmen Zustand freisetzt.

15. System nach einem der Ansprüche 7 bis 14, wobei das ¹¹C-Kohlendioxid-Gas-Ausgangsgemisch aus ¹¹C-Kohlendioxid und einem ersten Trägergas besteht, das sich nicht als Trägergas für Kohlenmonoxid eignet,
**dadurch gekennzeichnet, dass** das System weiterhin umfasst
eine Kohlendioxid-Fallenvorrichtung, wobei ¹¹C-Kohlendioxid, aber nicht das erste Trägergas, gefangen wird, welche Kohlendioxid fängt, das daraufhin in kontrollierter Weise freigesetzt werden kann, wodurch ein Trägergaswechsel so durchgeführt werden kann, dass das in die Reaktorvorrichtung (32) eintretende Gasgemisch aus Kohlendioxid und einem geeigneten Trägergas besteht.

16. System nach Anspruch 15, **dadurch gekennzeichnet, dass** die Kohlendioxid-Fallenvorrichtung eine Säule ist, die Kohlendioxid in einem kalten Zustand selektiv fängt, und das gefangene Kohlendioxid in einem warmen Zustand freisetzt.

## Revendications

1. Procédé de synthèse de marquage dans une chambre de réaction en utilisant un mélange gazeux enrichi en monoxyde de carbone ¹¹C en tant que réactif de marquage, **caractérisé en ce que** le mélange gazeux enrichi en monoxyde de carbone ¹¹C est produit à partir d'un mélange gazeux initial à base de dioxyde de carbone ¹¹C, par :
introduction de dioxyde de carbone ¹¹C dans un gaz porteur approprié,
transformation du dioxyde de carbone ¹¹C en monoxyde de carbone ¹¹C en introduisant ledit mélange gazeux dans un dispositif de réaction,
piégeage du monoxyde de carbone ¹¹C dans un dispositif de piégeage de monoxyde de carbone présentant un volume < 1 % du volume de la chambre de réaction, dans lequel le monoxyde de carbone ¹¹C est piégé mais pas ledit gaz porteur, et
libération dudit monoxyde de carbone ¹¹C piégé à partir dudit dispositif de piégeage vers un micro-tampon bien défini, de telle sorte qu'un volume de mélange gazeux enrichi en monoxyde de carbone ¹¹C est obtenu, et dans lequel le volume dudit micro-tampon est < 10% du volume de ladite chambre de réaction.

2. Procédé selon la revendication 1, **caractérisé par** l'étape de :
élimination des traces de dioxyde de carbone ¹¹C en déversant le mélange gazeux transformé à travers un dispositif d'élimination de dioxyde de carbone dans lequel le dioxyde de carbone ¹¹C est piégé mais pas le monoxyde de carbone ¹¹C ni le gaz porteur.

3. Procédé selon la revendication 1 ou 2, dans lequel le mélange gazeux de dioxyde de carbone ¹¹C initial est constitué par du dioxyde de carbone ¹¹C et un premier gaz porteur non approprié en tant que gaz porteur pour le monoxyde de carbone, tel que l'azote,
**caractérisé en ce que** l'étape d'introduction de dioxyde de carbone ¹¹C dans un second gaz porteur approprié comprend les étapes de :
déversement du mélange gazeux de dioxyde de carbone ¹¹C initial à travers un dispositif de piégeage de dioxyde de carbone, dans lequel le dioxyde de carbone ¹¹C est piégé mais pas ledit premier gaz porteur,
balayage dudit dispositif de piégeage de dioxyde de carbone avec ledit second gaz porteur approprié afin d'éliminer les résidus dudit premier gaz porteur, et
libération dudit dioxyde de carbone ¹¹C piégé dans ledit second gaz porteur approprié.

4. Procédé selon la revendication 1, **caractérisé par** les étapes de :
préparation d'une chambre de réaction à haute pression (50) comportant une entrée de liquide et une entrée de gaz sur une surface inférieure de celle-ci, préparation d'un volume de réactif destiné à être marqué,
introduction du mélange gazeux enrichi en monoxyde de carbone ¹¹C dans la chambre de réaction (50) par l'entrée de gaz,
introduction à haute pression dudit réactif dans la chambre de réaction (50) par l'entrée du liquide,
attente d'une durée prédéterminée pendant que la synthèse de marquage se produit, et
élimination du réactif marqué de la chambre de réaction (50).

5. Procédé selon la revendication 4, **caractérisé en ce que** l'étape d'introduction du réactif est mise en oeuvre en utilisant une pression qui est de 80 fois environ supérieure à la pression avant l'introduction, dans le but d'obtenir un système à une pseudo phase unique.

6. Procédé selon la revendication 4 ou 5, **caractérisé en ce que** l'étape d'attente d'une durée prédéterminée comprend le chauffage de la chambre de réaction (50) afin d'améliorer la synthèse de marquage.

7. Dispositif de synthèse de marquage dans une chambre de réaction, en utilisant un mélange gazeux enrichi en monoxyde de carbone ¹¹C en tant que réactif de marquage **caractérisé en ce qu'**il comprend :
(a) un dispositif d'écoulement de gaz fermé afin de produire un mélange gazeux enrichi en monoxyde de carbone ¹¹C à partir d'un premier mélange gazeux de dioxyde de carbone ¹¹C constitué par du dioxyde de carbone ¹¹ C et un gaz porteur approprié, comprenant :
un dispositif de réaction (32) dans lequel du dioxyde de carbone ¹¹C est transformé en monoxyde de carbone ¹¹C, et
un dispositif de piégeage de monoxyde de carbone présentant un volume < 1 % du volume de la chambre de réaction présentant un état de piégeage et un état de libération, dans l'état de piégeage, le monoxyde de carbone ¹¹C est piégé mais pas ledit gaz porteur, et dans l'état de libération, ledit monoxyde de carbone ¹¹C piégé est libéré dans un micro-tampon bien défini,
dans lequel le volume dudit micro-tampon est < 10 % du volume de ladite chambre de réaction ; et
(b) une chambre de réaction (50) présentant une entrée de liquide et une entrée de gaz sur une surface inférieure de celle-ci.

8. Dispositif selon la revendication 7, **caractérisé en ce que** le dispositif de réaction (32) est un four de réaction comprenant un matériau qui lorsqu'il est chauffé dans un intervalle de température prédéfini transforme le dioxyde de carbone ¹¹C en monoxyde de carbone ¹¹C.

9. Dispositif selon la revendication 8, **caractérisé en ce que** le matériau contenu dans le four de réacteur est du zinc ou du molybdène ou tout autre élément ou composé présentant des propriétés réductrices similaires.

10. Dispositif selon la revendication 9, **caractérisé en ce que** le dispositif de réaction (32) est un four à base de zinc qui est chauffé approximativement à 400°C.

11. Dispositif selon l'une quelconque des revendications 7 à 10, **caractérisé en ce qu'**il comprend, en outre :
un dispositif d'élimination de dioxyde de carbone, dans lequel le dioxyde de carbone ¹¹C est piégé mais pas le monoxyde de carbone ¹¹C ni le gaz porteur, de telle sorte que les traces de dioxyde de carbone ¹¹C sont éliminées.

12. Dispositif selon la revendication 11, **caractérisé en ce que** le dispositif de piégeage de dioxyde de carbone est une colonne qui piège sélectivement le dioxyde de carbone.

13. Dispositif selon l'une quelconque des revendications 7 à 12, **caractérisé en ce que** le dispositif de piégeage de monoxyde de carbone est un piège froid.

14. Dispositif selon la revendication 13, **caractérisé en ce que** le dispositif de piégeage de monoxyde de carbone est une micro-colonne, qui piège de manière sélective le monoxyde de carbone dans un état froid par dessous, et libère le monoxyde de carbone piégé dans un état chaud.

15. Dispositif selon l'une quelconque des revendications 7 à 14, dans lequel le mélange gazeux de dioxyde de carbone ¹¹C initial est constitué par du dioxyde de carbone ¹¹C et un premier gaz porteur non approprié en tant que gaz porteur pour le monoxyde de carbone,
**caractérisé en ce que** le dispositif comprend, en outre :
un dispositif de piégeage de dioxyde de carbone, dans lequel du dioxyde de carbone ¹¹C est piégé mais pas ledit premier gaz porteur, qui piège le dioxyde de carbone qui peut ensuite être libéré d'une manière commandée, ce par quoi un changement du gaz porteur peut être mis en oeuvre de telle sorte que le mélange gazeux entrant dans ledit dispositif de réaction (32) est constitué par du dioxyde de carbone et un gaz porteur approprié.

16. Dispositif selon la revendication 15, **caractérisé en ce que** le dispositif de piégeage de dioxyde de carbone est une colonne qui piège, de manière sélective, le dioxyde de carbone dans un état froid et libère le dioxyde de carbone piégé dans un état chaud.
